# EUROPEAN PATENT SPECIFICATION

(11) **EP 3 625 769 B1**
(45) Date of publication and mention of the grant of the patent: **16.04.2025**
(21) Application number: 18725669.8
(22) Date of filing: 23.04.2018
(51) Int. Cl.: G06T 7/62, G06T 7/564, A61J 7/02, B65B 5/10, G01V 8/20, G06M 7/02

(54) **APPARATUS FOR ACQUIRING INFORMATION RELATING TO AT LEAST ONE ARTICLE, AND CONNECTED METHOD**
VORRICHTUNG ZUR ERFASSUNG VON INFORMATIONEN IN BEZUG AUF MINDESTENS EINEN ARTIKEL UND VERBUNDENES VERFAHREN
APPAREIL D'ACQUISITION D'INFORMATIONS RELATIVES À AU MOINS UN ARTICLE, ET PROCÉDÉ CONNECTÉ

(30) Priority: 19.05.2017 IT 201700054517
(43) Date of publication of application: 25.03.2020
(73) Proprietor: I.M.A. Industria Macchine Automatiche S.p.A., 40064 Ozzano dell'Emilia (BO) (IT)
(72) Inventor: CASTAGNO, Paola, 10126 Torino (IT)
(74) Representative: Petraz, Gilberto Luigi
(86) International application number: PCT/IT2018/050070
(87) International publication number: WO 2018/211540

(56) References cited:
- WO-A2-2007/129318
- GB-A- 2 377 576
- US-A- 5 768 327
- US-B1- 9 072 652

## Description

### FIELD OF THE INVENTION

Embodiments described here concern an apparatus to acquire information relating to at least one article, in particular, but not only, relating to a plurality of articles moving homogeneously in a common direction, or with respect to which the apparatus itself moves in one direction.

Embodiments also concern a method to acquire information relating to at least one article.

The embodiments described here are applicable, although not limited to, uses where an accurate definition of the morphology and/or volume and/or type and/or number of moving articles is required.

Embodiments of the present invention are usable, by way of example, in counting and/or blister machines for articles in the form of tablets or capsules.

They can also be used in machines and/or apparatuses that process or work articles, whether they are completely or partly made of plastic, wood, metal, plaster, or others, which require precise counting and/or accurate control of the morphology and/or volume and/or type of such articles.

### BACKGROUND OF THE INVENTION

It is known that in certain fields in the state of the art, for example in preparation of or in cooperation with a packaging operation, it is necessary to acquire information, for example the morphology and/or volume and/or number and/or type, relating to at least one article, in particular relating to a plurality of articles moving homogeneously in a substantially common direction.

By way of non-restrictive example, during the preparation of the packages, or in a step upstream of this preparation, in the field of pharmaceuticals, food, chemicals, health, or suchlike, it is usual to provide a plurality of articles, generally uniform, in the form of tablets or capsules inside suitable containers.

In this case, particularly in the pharmaceutical or health sector but not only, the morphology of the product is important, as it indicates whether the product is intact or if it is damaged. If a product is damaged, it may not meet certain requirements, for example mass, compatibility, acceptance, etc.

Furthermore, a possible damage, or any other imperfection, even in terms, for example, of greater or lesser weight or different volume with respect to the expected value, can be due to problems, structural or sudden, upstream of the production line or in the production line itself, or of the control system; therefore a quick and precise identification of such damage or imperfections allows a more timely resolution of these problems.

Furthermore, any damage to a product, such as a health or pharmaceutical product, can spread toxic and/or harmful substances into the environment.

Moreover, it is frequently necessary to introduce inside containers a precise number, even very high in certain cases, of correctly conformed articles, or it can be necessary to correctly direct homogeneous groups, also by number, of articles toward other precise treatment lines.

It is also necessary, for example in the pharmaceutical and/or health sector, that the article should be morphologically correct, so that the end user can take it without problems.

Moreover, in the same production line articles that are different by morphology or type may come together.

In this case, the acquisition of the information can also be connected, as well as to selection means of incorrect articles, also to selection means of different articles, conveying them, for example, on subsequent specialized paths.

Although counting or detection apparatuses are known in general, these known apparatuses do not allow to obtain, with maximum precision, a quantity of information that allows to know every external aspect and/or the exact number of the articles which pass in movement through a determinate section of the forming and/or processing and/or packaging machine.

It is also known that the functioning of these apparatuses often depends on the working conditions present inside the industrial machines where the articles are worked and/or treated, so that non-ideal conditions make the known systems not sufficiently reliable.

In this context, for example in the chemical-pharmaceutical field, it is known that certain articles, by their nature and/or methods of production, can generate dust that can hinder, or intercept, the correct functioning of known apparatuses, or they can spread in the environment, or bring with them, toxic and/or harmful dust.

The prior art document US-B-9,072,652 (US'652) describes an apparatus and a method for counting pills which provides to adapt the passage section of the entrance aperture of the pills according to two predetermined volume thresholds of pills.

For each pill it is verified whether its volume comes within the range defined by the predetermined volume thresholds and the passage section of the entrance aperture is possibly modified.

However, this known solution does not allow efficient results to be obtained since the detection is not very precise due to the configuration of the sensors employed and, moreover, it does not allow to verify variations in shape, color, type, or other characteristics of the pills that are to be dispensed. The apparatus of US'652 does not allow to distinguish pills that come within the predetermined volume range, but having other characteristics that can make them unsuitable for dispensing.

In these cases, there is the problem that pills deemed acceptable may not meet certain requirements, for example mass, color, shape, surface imperfections, etc.

Furthermore, the apparatus described in US'652 provides to use strategies for removing dust which in any case do not take into consideration either the possibility that there is free dust, or that thin layers of dust can deposit on the optical sensors, lowering their efficiency.

Another problem not addressed by known documents is that they use receivers disposed only on some portions of the passage channel.

The disposition of the receivers configures the presence of multiple empty spaces between the receivers which is reflected in zones where the shadow cone generated by the interaction of the electromagnetic radiations emitted by the emitters with the article in transit cannot be detected.

This entails an incorrect reconstruction of the polygonal profile of these articles which, given the size of the capsules and/or tablets, would not allow to correctly detect their position in space.

The accuracy obtainable with known apparatuses is not sufficient to allow recognition of possible imperfections in the capsules themselves.

The prior art document WO-A2-2007/129318 describes a system for identifying drugs before they are taken by a user, based on the detection of one or more physical characteristics of the drugs to carry out a comparison to known drugs in order to avoid any errors in administering stage for an effective assistance of the patients. This system comprises one or more cameras for capturing images of the exterior of the drug so as to permit the analysis of size, color, markings. The system also comprises a transparent gating element and an associated gating motor configured to revolve the gating element to permit the pill to continue its path. Other additional check can be provided, such as for example the measure of the pills' weight.

This system does not allow to obtain a fast identification that allows to analyze a great number of pills in a very short time.

There is therefore a need to make available an apparatus, and the corresponding method, to acquire information relating to at least one article which overcomes at least one of the disadvantages of the state of the art.

One purpose of the present invention is to provide an apparatus to acquire information relating to at least one article equipped with relative motion with respect to the apparatus itself, in which the information can be processed in order to determine at least the volume and/or type and/or morphology of each article, and/or the number of a plurality of articles, all in real time and with high precision, even in the presence of dust or other disturbing factors.

Another purpose of the present invention is to provide an apparatus able to detect with high accuracy the surface profile and other characteristics of articles in the form of tablets and/or capsules.

Another purpose of the present invention is to provide a method to acquire information relating to at least one article which allows to quickly and extremely accurately define the volume and/or morphology and/or type of each article, and/or the number of a plurality of articles.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns an apparatus to acquire information relating to at least one article in relative motion with respect to the apparatus, said article being defined or variable over time, also according to predefined or pre-definable sequences; the apparatus is able to cooperate with at least one operating line along which at least one article is fed in sequence, in a random or defined position; the feed can be for articles which are identical or sequentially different, or mixed.

According to possible embodiments, the present invention concerns an apparatus to acquire information relating to one or more articles, for example in the form of tablets and/or capsules, in an operating line, said information comprising one or more of the following: shape, volume, type, sizes, weight, color, possible presence of surface irregularities, volumetric distribution, and/or combinations thereof.

According to possible embodiments, the apparatus comprises:
- an acquisition device provided with emitter means and receiver means disposed along a perimeter defining a passage section able to be passed through by at least one of the articles in transit in a direction of transit, said emitter means and said receiver means being respectively configured to emit and receive electromagnetic radiations and supply a corresponding signal;
   and
- a processing unit configured to receive and process the signal in order to obtain at least a set of data relating to a portion of the article from which to determine one or more pieces of information relating to the article.

In accordance with one aspect of the present invention, the receiver means are essentially disposed, without a break in continuity, either physically or of material, around the passage section in order to receive at least part of the electromagnetic radiation emitted by the emitter means.

This solution is advantageous since it allows to reconstruct with high precision the polygonal profile that approximates the section of the article in transit.

The Applicant has found that the presence of empty spaces between the receiver means entails a false determination of the polygonal profile of the article that, especially in the case of capsules or tablets, not only does not allow to determine whether it has possible imperfections, but also does not allow to determine the position in the space of the tablet itself.

The presence of receiver means located without a break in continuity, or in any case with a minimum interval between them, along the perimeter of the passage section, allows to overcome this problem and to obtain an accurate detection of the morphology of the article.

The emitter means are disposed, with respect to the receiver means, oriented so as to emit an electromagnetic radiation toward the passage section, to strike with the electromagnetic radiation on the article in transit through the passage section.

According to possible embodiments, the apparatus can comprise:
- a memorization unit configured to memorize in advance information processed by the processing unit, associating it with each specific article; and
- a control and command unit configured to perform a self-learning of the information relating to one or more articles, comparing the information processed by the processing unit for each of the articles which, during use, passes through the passage section, with the information relating to one or more articles previously memorized in the memorization unit, in order to verify the correspondence of each of the articles in transit through the passage section with at least one of the articles corresponding to the information memorized so as to at least adapt the emission and/or reception characteristics of the electromagnetic radiations of at least one of the emitter means and/or the receiver means as a function of the correspondence of the information verified.

According to possible embodiments, the apparatus can comprise at least an optical sensor disposed at a defined distance upstream of the acquisition device, in the direction of transit.

The optical sensor can be configured to supply a signal on the passage of a corresponding article, said signal being correlated, by means of the processing unit, with the distance and with the moment of transit of the article through the passage section, in order to obtain the speed of transit of the article through the passage section.

This allows to detect the speed of the article in transit and also, possibly, to verify that the latter passes along the desired path.

The information about the speed is useful to correctly determine the volume of the article without this being negatively affected by the alteration due to different transit speeds of the articles.

According to possible embodiments, at least part of the emitter means can be outside the receiver means, or the former can be distinct and separate from the latter.

In accordance with possible embodiments, at least part of the emitter means and the receiver means are disposed on respective lying planes different from each other and orthogonal to the direction of transit of the article through the passage section.

In this case, according to possible embodiments, at least part of the emitter means disposed on the respective lying plane can be disposed upstream of the receiver means with respect to the direction of transit. In the direction of transit followed by the article, the emitter means can be located nearer the feed zone of the articles with respect to the receiver means.

For example, if the direction of transit of the article is vertical, the emitter means can be disposed above the receiver means.

According to possible embodiments, at least part of the emitter means disposed on the respective lying plane can be oriented toward at least part of the receiver means with an angle of inclination of less than 5°, or the electromagnetic radiation emitted by the emitter means is sent in a direction of emission inclined by an angle of inclination.

In accordance with possible embodiments, at least part of the emitter means can be embedded and/or incorporated in the receiver means.

In one embodiment, each of the emitter means is disposed opposite at least a corresponding receiver mean in order to acquire, together, the set of data relating to the whole perimeter or section of the article which, during use, passes through the passage section.

In this way, the emitter means and the receiver means, together, being disposed in a distributed way and in the desired number along a perimeter that surrounds the direction of transit of the articles through the passage section of the acquisition device.

Moreover, in some embodiments, each emitter mean and each receiver mean is disposed and configured, with respect to the article in relative movement, to obtain information on at least a portion of perimeter of the article, so that the information acquired by the plurality of emitter means and receiver means allows, possibly by means of interpolation, to have information relating to the whole perimeter or section of the article.

According to possible embodiments, the emitter means can each be configured to emit an electromagnetic radiation that is interrupted by the transit of the article through the passage section, generating a shadow cone.

In this case, the receiver means can each be configured to detect, instant by instant, the respective shadow cone, and thus determine a shadow projection, or profile, of a portion of the surface of the article.

The processing unit can be configured to determine, from the association of the shadow projections obtained in the same instant by the receiver means, a polygon whose area approximately corresponds to the area of a section of a portion of the article.

In accordance with possible embodiments, the control and command unit can be configured to adapt, that is to modulate, the emission and/or reception characteristics of the electromagnetic radiations of at least one of the emitter means and/or the receiver means in relation to the possible presence of free and/or deposited dust on the emitter means and/or on the receiver means, wherein the possible presence of dust is determined by the control and command unit which, during use, compares the information processed relating to the one or more articles with the information previously memorized.

This advantageously allows to avoid having to drive suitable dust removal means, for example, increasing the emission power of the electromagnetic radiation, or adjusting the latter if there is free dust. This also entails both energy saving, the possibility of not interrupting the dispensing of the articles in order to remove the dust, as well as the possibility of dispensing the articles even if there is free dust or poor lighting.

According to possible embodiments, at least one of either the emitter means or the receiver means comprise a plurality of punctiform LEDs. This characteristic allows to reconstruct the shape of the articles with high precision and detail, since it is possible to scan the article from a plurality of distributed observation points.

In accordance with possible embodiments, the emitter means and the receiver means can be configured to carry out a plurality of detections on distinct section planes of the article in transit, and the processing unit can be configured to reconstruct, from the detections, the three-dimensional configuration of the article through the association of a plurality of polygons obtained during the transit of the article through the passage section.

In other embodiments, several subsequent detections, at high frequency or continuously, are carried out during the motion of the article, or of each article, with respect to the emitter and receiver means, so as to acquire a plurality of information on different planes substantially orthogonal to the direction of movement between the article and the acquisition device.

According to a first embodiment, the acquisition device is fixed and the articles are in movement with respect to it.

According to possible embodiments, the acquisition device is located so that the articles, during use, transit by falling or by gravity, through the passage section.

According to a variant, the acquisition device is in movement with respect to the articles.

According to another variant, the articles and the acquisition device are both equipped with relative motion, one relating to the other.

In accordance with possible embodiments, the apparatus can comprise movement means configured to move the acquisition device with respect to the articles.

In accordance with the present invention, the acquisition device is configured to acquire information relating to each individual article transiting in relation to the acquisition device, said information deriving from the information connected to the electromagnetic radiations as received by the plurality of receiver means.

In accordance with possible embodiments, the apparatus can comprise a selector member, commanded by the control and command unit to divert the path of any article not corresponding to a desired article, wherein the information on the desired article is memorized in the memorization unit.

According to possible embodiments, the apparatus can comprise dust removal means commanded by the control and command unit to remove, by means of mechanical vibrations, possible dust deposited on the emitter means and/or the receiver means.

According to a variant, said means can be configured to emit a vibration or a range of vibrations.

According to possible embodiments, the emitter means can be configured to emit radiation of infrared light with a wavelength comprised between 800 nm and 1000 nm, said radiation of infrared light being substantially unaltered by the interaction with dust.

In accordance with possible embodiments, the processing unit comprises a counter to count the number of articles which, during use, pass through the passage section.

According to possible embodiments, the processing unit can comprise color analysis means configured to supply on exit information relating to the color of the article which, during use, passes through the passage section.

According to possible embodiments, the control and command unit can comprise calculation means configured to calculate the mass of the article which, during use, passes through the passage section, wherein said mass is calculated by multiplying the volume processed by the processing unit of the article by its density.

Embodiments of the present invention also concern a method to acquire information such as shape, volume, type, sizes, weight, color, possible presence of surface irregularities, volumetric distribution, and/or combinations thereof, relating to one or more articles in the form of tablets and/or capsules.

According to possible embodiments, the method provides to:
- perform acquisition scans of signals corresponding to the transit, through a passage section, of at least one of the articles in a direction of transit, by means of emitter means and receiver means disposed along the perimeter of the passage section;
- process the signals to obtain at least a set of data relating to a portion of the article to determine from the latter one or more pieces of said information about the article.

In accordance with one aspect of the present invention, during the scans the reception of the electromagnetic radiations emitted by the emitter means toward the article in transit through the passage section is carried out essentially without a break in continuity, either physically or of material, around the passage section by means of the receiver means.

According to possible embodiments, the method can provide to:
- memorize in advance processed information, associating it with each specific article in transit through the passage section;
- perform a self-learning of the information relating to one or more articles, comparing the information processed for each of the articles in transit through the passage section with the information relating to one or more articles previously memorized, in order to verify the correspondence of each of the articles in transit through the passage section with at least one of the articles corresponding to the information memorized, so as to at least adapt the emission and/or reception characteristics of the electromagnetic radiations of at least one of the emitter means and/or the receiver means as a function of the correspondence of the information verified.

According to possible embodiments, the method can provide to adapt the emission and/or reception characteristics of the electromagnetic radiations of at least one of the emitter means and/or the receiver means in relation to the possible presence of free and/or deposited dust on the emitter means and/or the receiver means.

In accordance with possible embodiments, the method can provide to divert the path of the article whenever the information processed does not correspond with the memorized information relating to a desired article.

According to possible embodiments, the method can provide that at least part of the emitter means emit electromagnetic radiations from a position lying on a lying plane different from a lying plane on which the receiver means are disposed, said lying planes being orthogonal to the direction of transit.

According to possible embodiments, the method can provide that the position from which at least one part of the emitter means emits electromagnetic radiations is disposed upstream of the receiver means with respect to the direction of transit.

According to possible embodiments, the method can provide that at least one part of the emitter means emits electromagnetic radiations from said position lying on said lying plane toward at least part of the receiver means with an angle of inclination less than 5°.

According to possible embodiments, the method can provide that the emitter means each emit an electromagnetic radiation that is interrupted by the transit of the article through the passage section, generating a shadow cone. In this case, the method provides that the receiver means each detect, instant by instant, a shadow projection of the article, and that the processing unit associates each shadow projection of the same instant to determine a polygon whose area approximately corresponds to the area of a section of a portion of the article.

In accordance with possible embodiments, the method provides to associate a plurality of polygons obtained on distinct section planes of the article passing through the passage section, to reconstruct the three-dimensional configuration of the article.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the specification or in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic representation of an apparatus according to a possible embodiment of the present invention;
- fig. 2 is a variant of fig. 1;
- fig. 3 is an example view from above of a step of continuous emission and reception of electromagnetic radiations;
- fig. 4 is an enlarged detail of fig. 3;
- fig. 5 is a view from above of an apparatus according to a possible embodiment;

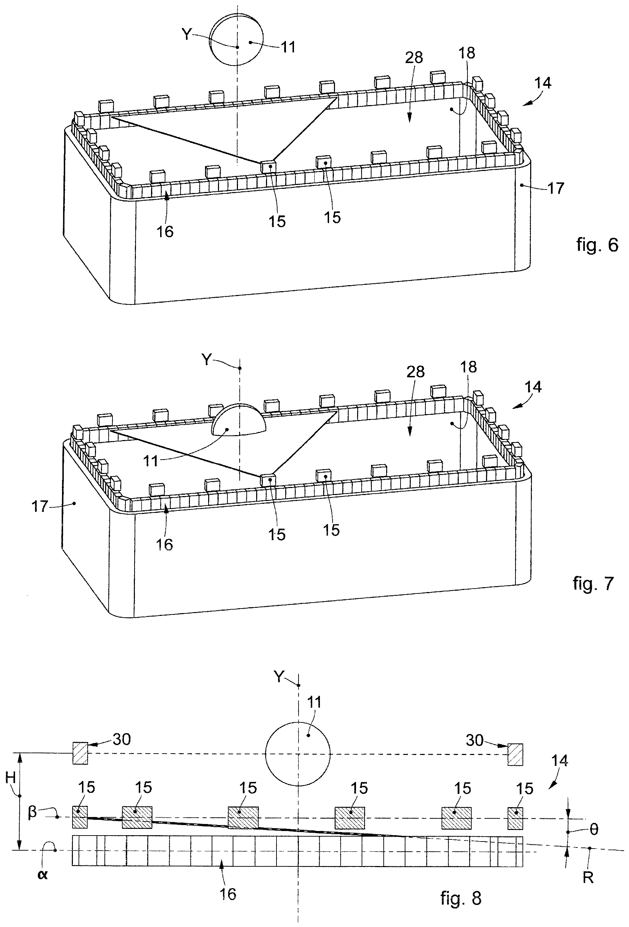

- figs. 6 and 7 are two perspective schematic views of the apparatus of fig. 5 in two successive instants during the transit of an article;
- fig. 8 is a lateral view of an apparatus according to a possible embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

With reference to the drawings shown, embodiments described here concern an apparatus 10 to acquire information relating to at least one article 11 equipped with relative motion with respect to the apparatus 10 itself.

The articles 11 can be defined or variable over time, or articles 11 that are different in shape and/or size and/or type can be interposed.

By way of non-restrictive example only, the articles 11 can have a shape similar to a tablet, or alternatively, or in addition, the articles 11 can have a shape similar to a capsule.

According to possible embodiments, the apparatus 10 comprises:
- an acquisition device 14 provided with emitter means 15 and receiver means 16 disposed opposite each other along a perimeter defining a passage section 28 which, during use, is passed through by at least one of the articles 11 in transit in a direction of transit X or Y, said emitter means 15 and said receiver means 16 being respectively configured to emit and to receive electromagnetic radiations and to provide a corresponding signal;
- a processing unit 20 configured to receive and process the signal to obtain at least a set of data relating to a portion of the article 11 from which to determine one or more pieces of information on the article 11.

According to one aspect of the present invention, the receiver means 16 can be disposed essentially without a break in continuity along the perimeter of the passage section 28.

The receiver means 16 can be disposed on a first geometric plane, or lying plane, α orthogonal to the direction of transit X or Y.

According to possible embodiments, the apparatus 10 comprises:
- a memorization unit 29 configured to memorize in advance information processed by the processing unit 20, associating it with each specific article 11;
- a control and command unit 25 configured to perform a self-learning of the information relating to one or more articles 11, comparing the information processed by the processing unit 20 for each of the articles 11 which, during use, passes through the passage section 28, with the information relating to one or more articles 11 previously memorized in the memorization unit 29, in order to verify the correspondence of each of the articles 11 in transit through the passage section 28 with at least one of the articles 11 corresponding to the information memorized so as to at least adapt the emission and/or reception characteristics of the electromagnetic radiations of at least one of the emitter means 15 and/or the receiver means 16 as a function of the correspondence, or otherwise, of the information verified.

According to possible embodiments, the control and command unit 25 can use an algorithm which, in relation to the specific environmental and measurement conditions, adapts the emission and/or reception characteristics of the electromagnetic radiations of at least one of the emitter means 15 and/or the receiver means 16 in relation to the expected ones previously acquired and memorized.

The apparatus 10 can cooperate with at least one operating line 12, of any type, along which the articles 11 are sequentially fed in a random or defined position, in order to feed them, for example, toward at least one container 13.

By passage section 28, for example, we can understand a cross section of a channel, a pipe, a tube, or other element able to convey the articles 11 along a transit path.

If the emitter means 15 and the receiver means 16 are fixed on walls not connected to one another, the passage section 28 is defined by the portion of the lying plane in which the receiver means 16 lie, said portion being surrounded by the receiver means 16 and being framed by the emitter means 15.

In accordance with possible embodiments, the apparatus 10 comprises an acquisition device 14 to acquire information relating to the individual article 11 transiting in a direction of transit X, Y, that is which is temporally presented in relation to it, disposed in functional connection with the operating line 12. For example, the direction of transit can be a horizontal or essentially horizontal direction X or a vertical direction Y, as explained in detail below.

According to possible embodiments, at least part of the emitter means 15 can be outside the receiver means 16, that is, the former can be distinct and separate from the latter.

According to possible embodiments, at least part of the emitter means 15 can be offset with respect to the direction of transit X or Y of the article 11 through the passage section 28.

In this case, according to possible embodiments, the emitter means 15 disposed on the respective geometrical plane or lying plane α, can be put before the receiver means 16 with respect to the direction of transit X or Y followed, during use, by the article 11. In the direction of transit X or Y followed by the article 11, the emitter means 15 can be put nearer to the feed region of the articles 11 with respect to the receiver means 16.

For example, if the direction of transit Y of the article 11 is vertical, the emitter means 15 can be disposed above the receiver means 16.

The receiver means 16 can be disposed on a second geometrical plane or lying plane β, orthogonal to the direction of transit X or Y.

The first geometric plane α and the second geometric plane β can be parallel to each other.

In some embodiments, at least part of the emitter means 15 and the receiver means 16 are disposed on respective lying planes α, β, which are different from each other and orthogonal to the direction of transit X or Y.

According to possible embodiments, the emitter means 15 disposed on the respective geometrical plane or lying plane α can be oriented toward at least part of the receiver means 16 with an angle of inclination θ of less than 5°, that is, the electromagnetic radiation emitted by the emitter means is sent in an emission direction R inclined by an angle of inclination θ.

In accordance with possible embodiments, at least part of the emitter means 15 can be embedded and/or incorporated in the receiver means 16.

The acquisition device 14 can comprise emitter means 15 and receiver means 16 configured to emit and respectively receive electromagnetic radiations, affecting a transit condition of an article 11.

According to possible embodiments, the emitter means 15 and receiver means 16 can be configured to emit/receive electromagnetic radiations with a defined or variable frequency.

According to possible embodiments, the emitter means 15 and the receiver means 16 can perform the operation with a scanning interval comprised between 100 µs to 350 µs.

According to possible embodiments, the emitter means 15 can be LEDs (Light-Emitting Diodes).

According to a variant, the emitter means 15 can be configured to emit infrared light radiation having a wavelength λ comprised between 800 nm and 1000 nm.

The latter variant is particularly advantageous, since Applicant has observed that most of the dust that is generally formed in industrial machines is transparent to this electromagnetic radiation. Therefore, embodiments according to this variant allow the apparatuses 10 to acquire information relating to at least one article 11 even when free dust is present, or deposited on the articles 11, or on the emitter means 15 and/or on the receiver means 16.

According to possible embodiments, the receiver means 16 can be CMOS (Complementary Metal Oxide Semiconductor) sensors.

According to possible embodiments, the acquisition device 14 can be provided with a support body 17 having a through aperture 18.

According to possible embodiments, the emitter means 15 and the receiver means 16 are disposed inside the aperture 18, on a defined lying plane 19 or on a respective geometric plane α or β.

According to possible embodiments, the emitter means 15 and the receiver means 16 are disposed in positions which define a plurality of different detection positions. In particular, the detection positions can be disposed in a radial manner with respect to the transit path of the article 11.

Even more particularly, the emitter means 15 and the receiver means 16 are disposed along a perimeter which develops around the movement path of the articles 11, each emitter mean 15 being disposed opposite a corresponding receiver mean 16 with respect to the direction of transit X, Y defined by the movement path, so as to acquire, as a whole, information on the entire perimeter or section of the article 11 moving with respect to the apparatus 10.

Advantageously, the support body 17 can be configured to define or delimit the movement path of the article 11 in transit.

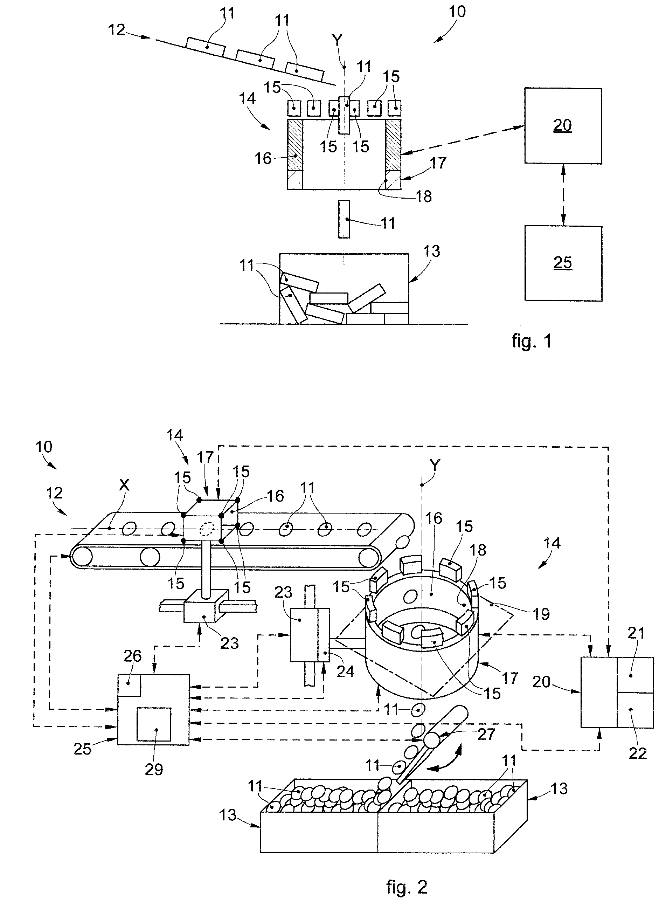

According to possible embodiments, shown by way of example in fig. 1 or 2, the support body 17 can have a ring shape, circular or polygonal or in any case a through shape with an entrance and an exit through which the transit path of the article 11 in transit develops. For example, the support body can have a rectangular aperture with sides of about 30mm and 60mm. However, it is not excluded that the support body 17 can also have other shapes or include apertures.

In accordance with possible embodiments, described using fig. 2, the acquisition device 14 can be disposed downstream of the operating line 12, and in particular of the system to feed and advance the articles 11, so that it is able to receive the articles 11 exiting from the operating line 12, for example transiting due to falling or gravity, and in this case, the direction of transit of the articles 11 is a vertical direction Y. In this case, the movement of the article 11 with respect to the acquisition device 14 is essentially determined by gravity.

In accordance with other possible embodiments, described using fig. 2, the acquisition device 14 can be disposed in correspondence with the operating line 12, and in particular with the system to feed and advance the articles 11. In this case, the movement of the article 11 with respect to the acquisition device 14 is essentially determined by the system to feed and advance the articles 11 of the operative line 12.

According to these possible embodiments, shown by way of example on the left in fig. 2, the support body 17 can be made as a channel inside which the articles 11 transit, and provided in direct relation with the operating line 12. This solution can allow, for example, a greater regulation of the speed of transit of the articles 11 with respect to the acquisition device 14, and would require a part of the articles 11 to be in contact with the operating line 12, which could be a possible obstacle for the detection of the electromagnetic radiations emitted by the emitter means 15 of the acquisition device 14.

According to possible embodiments, in this case, the operating line 12 can advantageously be made of a material transparent to electromagnetic radiations. In accordance with these embodiments, therefore, one or more emitter means 15 can be provided in relation to the operating line 12, so as to obtain information also relating to the part of the article 11 resting on the operating line 12. In this case, the direction of transit X can be an essentially horizontal direction.

The apparatus 10 also comprises a processing unit 20, configured to receive the information obtained from the acquisition device 14 and to process said information, determining the desired characteristics relating to each individual article 11, including the three-dimensional configuration.

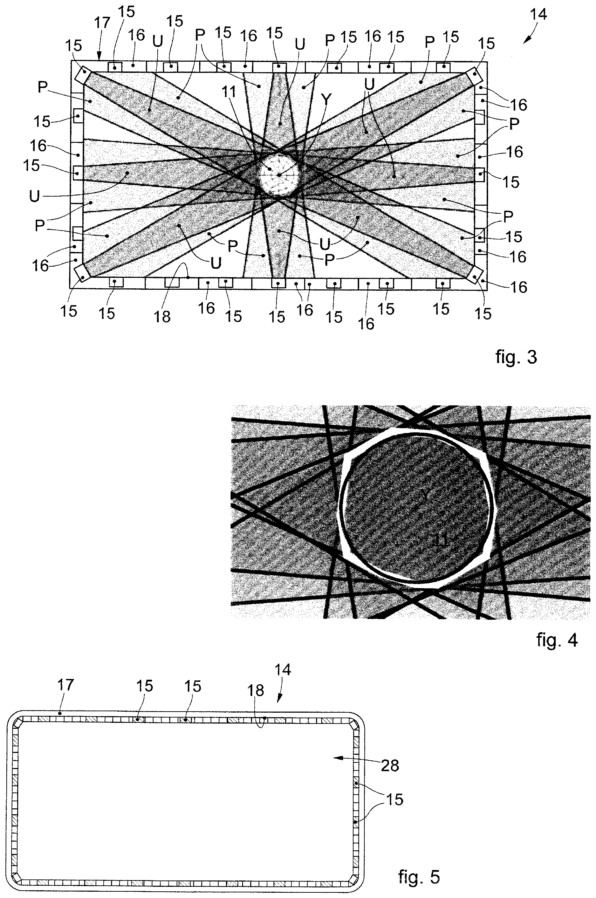

With reference to figs. 3 and 4, an article 11 is shown which transits in direct relation with an acquisition device 14; fig. 3 shows the emitter means 15 which emit electromagnetic radiations which hit the article 11 and which are detected by the receiver means 16.

In particular, with reference to figs. 3 and 4, the emitter means 15 are each configured to emit an electromagnetic radiation which is interrupted by the transit of the article 11 through the apparatus 10 along the desired movement path, generating a shadow cone.

Here and hereafter in the description, by the expression "shadow cone" we mean the overall shadow cone formed by the sum of the area of the shadow cone proper and of the areas of the two penumbra cones, on the sides of the central shadow cone, generated by the beam of electromagnetic radiation striking the article 11 to be analyzed, and identified respectively by the letter U and the letters P for example in fig. 3.

It should be noted that, for clarity of representation, figs. 3 and 4 show only some of the beams of electromagnetic radiation emitted by the emitter means 15, and the corresponding shadow cones, although it is understood that all the emitter means 15 provided emit electromagnetic radiation, and generate respective shadow cones, so that all the surface of all the receiver means 16 is affected by the respective shadow cones.

With reference to fig. 3, the corresponding receiver means 16 are each configured to detect, instant by instant, the respective shadow cone generated by the passage of the article 11 in correspondence with the radiation emitted by a respective emitter mean 15, and thus determine a shadow projection or profile of a portion of the surface of the article 11.

Therefore, the processing unit 20 can be configured to determine, from the association of the shadow projections obtained at the same instant from the combination of the receiver means 16, a polygon whose area approximately corresponds to the area of a section of a portion of the article 11.

By performing in sequence, by means of the emitter means 15 and the receiver means 16, a plurality of detections that affect a corresponding plurality of distinct section planes of the article 11 in movement, it is possible to obtain information relating to the complete morphology of the article 11, so as to be able to reconstruct it and possibly compare it with an expected morphology.

The processing unit 20 can, in fact, be configured to process the information obtained during the transit of the article 11 through the apparatus 10, so as to reconstruct the three-dimensional configuration of the article 11.

According to some embodiments, the greater the number of emitter means 15 and corresponding receiver means 16, the greater will be the approximation of the polygon area obtainable from the shadow projections to the effective area of the section of a portion of the corresponding article 11, and therefore the more accurate the detection will be. By way of non-restrictive example only, there can be eight emitter means 15, as shown in fig. 3, but it is not excluded that there can be a greater or lesser number of emitter means 15, also in relation to the shape, size and relative speed of the article 11, providing, on each occasion, an approximation suitable to the dynamic conditions of transit and to the type and shape and/or volume of the articles 11 that are analyzed.

It should therefore be considered that the approximation obtained by selecting an appropriate number of emitter means 15 and corresponding receiver means 16, suitable to the dynamic conditions of transit and to the type and shape and/or volume, or morphology, of the articles 11 which on each occasion are considered, can be correlated to an expected error precisely regarding the given shape and/or volume, or morphology, of the articles to be analyzed and possibly on the dynamic conditions. In fact, it should be considered that, since at least the expected shape and/or volume or morphology are known in advance of the articles 11 of a given group of articles 11 to be analyzed, the expected error, correlated to the said approximation, can be calculated in advance, and therefore foreseen, so that it is possible, downstream, to purify from the expected error the signal and the information obtained from the emitter means 15 and from the corresponding receiver means 16.

In this way, advantageously, the apparatus 10 is also able to manage situations in which the articles 11 in transit are oriented in a non-optimal manner, for example they are inclined or rotated, or rotate during transit.

According to possible embodiments, the processing unit 20 can also comprise a counter 21 configured to count the number of articles 11 in transit, or which are temporally presented in relation to the acquisition device 14.

According to possible embodiments, the processing unit 20 can also comprise color analysis means 22 configured to provide at exit information relating to the color of the article 11.

The present invention also comprises a control and command unit 25, configured to receive, and possibly memorize, the characteristics relating to each individual article 11 from the processing unit 20 and define at least one of the following characteristics, that is, the morphology and/or the volume and/or type of each article 11, and/or the number of a plurality of said articles 11.

According to the present invention, the control and command unit 25 is configured to operate, and in fact operates in normal functioning, based on the results, possibly also in feedback.

According to possible embodiments, the control and command unit 25 can be configured to formulate possible control instructions to be sent downstream and/or upstream, for example to the operating line 12.

These instructions can be directly connected to the results defined by the control and command unit 25.

According to possible embodiments, by way of non-restrictive example, if different articles 11 in sequence come together in the production line 12, the control and command unit 25 can be configured to determine whether the morphology and/or volume and/or type and/or number of the articles 11 satisfy or not possible predetermined parameters memorized inside it.

In accordance with these possible embodiments, the apparatus 10 can comprise, for example downstream, a selector member 27, for example a mobile deflector or suchlike, commanded by the control and command unit 25, configured, for example, to selectively convey one or more articles 11 on subsequent specialized routes.

According to possible embodiments, the control and command unit 25 can comprise calculation means 26 configured at least to calculate the mass of one or more articles 11, knowing the density of the article 11 and having detected its volume.

For example, if the average density of an article 11 is known, the calculation means 26 can be configured to calculate the mass of said article 11 by obtaining the volume.

On the basis of information memorized inside the control and command unit 25, the processing unit 20 is also able, possibly, to calculate the weight of each article 11 to verify that it is congruent with an expected value of the article 11.

According to possible embodiments, the control and command unit 25 can be configured to modulate the emission and/or reception of the electromagnetic radiations of the emitter means 15 and/or of the receiver means 16.

In accordance with this embodiment, the modulation of the electromagnetic radiations, which can even reach up to 80%, allows the control and command unit 25 to receive information compensating for possible disturbances, such as the presence of dust or other continuous, or periodic, or random disturbing factors.

According to possible embodiments, the apparatus 10 can comprise two or three acquisition devices 14 disposed on different lying planes.

For example, it can comprise a first acquisition device 14 distanced from a second acquisition device 14 in the direction of transit X or Y.

According to possible embodiments, the apparatus 10 can comprise at least one optical sensor 30 disposed at a defined distance H upstream of the acquisition device 14, in the direction of transit X or Y.

The optical sensor 30 can comprise a photocell, or other sensor which detects the passage of the article 11 and memorizes the initial time.

The optical sensor 30 can also be configured to detect the transit time of the article 11, to allow to know how long it took the article 11 to reach the acquisition device 14.

This allows to detect the speed of the article 11 in transit and also, possibly, to verify that the latter passes along the desired path.

From the knowledge of the speed it is possible to correctly determine the volume of the article 11, by applying to the volume detected by the acquisition device 14 a conversion factor related to the speed of the article 11, so that, advantageously according to the type of article 11 expected (for example self-learned or known in advance), it is possible to compensate for possible acquisitions that are altered by specific dynamic conditions of the article 11 in transit.

The reconstruction of the volume of the article 11 starting from the acquired sections of it can be performed using the speed detected, and possibly correcting it with gravitational acceleration. This allows to consider that the speed is increasing during the fall through the passage section 28.

In accordance with possible other embodiments, the processing unit 20 and the control and command unit 25 can be integrated into a single electronic unit configured to perform the functions of both, as described above.

It should be noted that the procedure that takes into account the expected error, correlated to said approximation, as described above, can be performed by the processing unit 20 or by the control and command unit 25, or possibly by the electronic unit that integrates these two units.

According to a first embodiment, shown in fig. 2 merely by way of non-restrictive example, the acquisition device 14 is stationary and the articles 11 are moved by means of the operating line 12.

According to possible embodiments, the articles 11 can transit inside the aperture 18 of the support body 17 of the acquisition device 14.

In accordance with these possible embodiments, described using figs. 1 and 2 and, in particular the part on the right of fig. 2, the acquisition device 14 can be configured in such a way that the articles 11 are able to transit, and transit during normal use, in relation to the acquisition device 14 due to falling or gravity, so that, as indicated above, the direction of transit is a vertical direction Y.

According to some experimental results obtained by the Applicant, the articles 11 can transit on average in relation to the acquisition device 14 also at a speed of 1 m/s and more, up to 2 m/s.

According to a variant, the apparatus 10 can comprise movement means 23 configured to move the acquisition device 14 with respect to the plurality of articles 11.

According to possible embodiments, the movement means 23 can be guide rails, robotic arms, or other similar or comparable means.

According to possible embodiments, the apparatus 10 can comprise means 24 configured to prevent any dust from interfering with the acquisition device 14, said means 24 being, for example, configured to emit a jet of separation fluid, chosen as desired, possibly in relation to the problems of the article 11 in transit, in direct relation with the surface of the acquisition device 14.

Alternatively or in addition, said means 24 can be configured to emit a vibration, for example even up to 300 Hz, in order to prevent interference from dust.

According to possible embodiments, shown by way of non-restrictive example only, in fig. 2, the means 24 can be provided in a single body with the possible movement means 23. However, it cannot be excluded that the means 24 can be of another type, for example integrated directly into the support body 17.

One advantage of the invention is to be able to work for a long time without interruptions compared with the counter or detection devices of the state of the art which, in the presence of dust, require frequent cleaning and/or maintenance operations, generally every 15-20 minutes.

The present invention also concerns a method to acquire information relating to at least one article 11 provided with relative motion to the apparatus 10, which provides to make one or more articles 11 cooperate temporally, said articles 11 being the same or randomly or sequentially different, in direct relation with an acquisition device 14 which comprises a plurality of emitter means 15 and receiver means 16 configured respectively to emit and receive electromagnetic radiations affecting a transit condition of the article 11.

The method also provides to acquire the information relating to each individual article 11 deriving from the information connected with the electromagnetic radiations as received by the acquisition device 14.

The information thus acquired is processed by a processing unit 20 to determine the desired and/or sought for characteristics of each individual article 11 and to obtain at least the respective three-dimensional configuration.

The characteristics thus obtained are supplied to a control and command unit 25, which defines the morphology and/or volume and/or type and/or number of the articles 11 that have passed through, and operates in direct correlation with the results.

According to the experimental results obtained by Applicant, the method according to the present invention is able to define the morphology and/or volume and/or type and/or number of the articles 11 with an error comprised between 1% and 16%, on average 10%.

According to possible embodiments, the method can also provide that the emitter means 15 each emit an electromagnetic radiation which is interrupted by the transit of the article 11 through the apparatus 10, generating a shadow cone. Therefore, the receiver means 16 each detect, instant by instant, a shadow projection of the individual article 11, and the processing unit 20 can associate each shadow projection of the same instant to determine a polygon whose area approximately corresponds to the area of a section of a portion of each article 11.

According to possible embodiments, the association of a plurality of polygons obtained, on distinct section planes of the article 11 during the transit of each article 11 through the apparatus 10, allows the processing unit 20 to reconstruct the three-dimensional configuration of each article 11.

It is clear that modifications and/or additions of parts can be made to the apparatus and method to acquire information concerning at least one article as described heretofore, without departing from the scope of the present invention as defined in the claims.

It is also clear that, although the present invention has been described with reference to some specific examples, a person of skill in the art shall certainly be able to achieve many other equivalent forms of apparatus and method to acquire information concerning at least one article, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Apparatus for acquiring information relating to one or more articles (11) in relative motion with respect to the apparatus, said information comprising one or more of the following: shape, volume, type, sizes, weight, color, possible presence of surface irregularities, volumetric distribution, and/or combinations thereof, wherein said apparatus comprises:
- an acquisition device (14) provided with emitter means (15) and receiver means (16) arranged around a passage section (28) suitable to be passed through by at least one of said articles (11) in transit in a direction of transit (X, Y), said emitter means (15) and said receiver means (16) being respectively configured to emit and receive electromagnetic radiations and supply a corresponding signal;
- a processing unit (20) configured to receive and process said signal in order to obtain at least a set of data relating to a portion of said article (11) from which to determine one or more pieces of said information relating to said article (11);
**characterized in that** said receiver means (16), preferably of CMOS type, are arranged, essentially without a break in continuity, along a perimeter around said passage section (28) in order to receive at least part of the electromagnetic radiation emitted by said emitter means (15), and **in that** said emitter means (15) are arranged, with respect to said receiver means (16), oriented so as to emit an electromagnetic radiation toward said passage section (28), to strike with the electromagnetic radiation on said article (11) in transit through said passage section (28).

2. Apparatus as in claim 1, **characterized in that** said apparatus further comprises:
- a memorization unit (29) configured to memorize in advance information processed by said processing unit (20), associating it with each specific article (11);
- a control and command unit (25) configured to perform a self-learning of the information relating to said one or more articles (11), comparing the information processed by said processing unit (20) for each of said articles (11) which, during use, passes through said passage section (28), with the information relating to said one or more articles (11) previously memorized in said memorization unit (29), in order to verify the correspondence of each of said articles (11) in transit through said passage section (28) with at least one of the articles (11) corresponding to said information memorized so as to at least adapt the emission and/or reception characteristics of the electromagnetic radiations of at least one of said emitter means (15) and/or said receiver means (16) as a function of the correspondence of the information verified.

3. Apparatus as in claim 2, **characterized in that** said control and command unit (25) is configured to adapt the emission and/or reception characteristics of the electromagnetic radiations of at least one of said emitter means (15) and/or said receiver means (16) in relation to the possible presence of free and/or deposited dust on said emitter means (15) and/or said receiver means (16), wherein the possible presence of dust is determined by means of said control and command unit (25) that is configured to compare the processed information relating to said one or more articles (11) with the information previously memorized.

4. Apparatus as in claim 2 or 3, **characterized in that** it comprises dust removal means (24) commanded by said control and command unit (25) to remove, by means of mechanical vibrations, possible dust deposited on said emitter means (15) and/or said receiver means (16) and/or **in that** it comprises a selector member (27), commanded by said control and command unit (25) to divert the path of an article (11) not corresponding to a desired article, wherein said information on said desired article (11) is memorized in said memorization unit (29) and/or **in that** said control and command unit (25) comprises calculation means (26) configured to calculate the mass of said article (11) which, during use, passes through said passage section (28), wherein said mass is calculated by multiplying the volume processed by said processing unit (20) of said article (11) by its density.

5. Apparatus as in any claim hereinbefore, **characterized in that** it comprises at least an optical sensor (30) arranged at a defined distance (H) upstream of said acquisition device (14), in said direction of transit (X, Y), said optical sensor (30) being configured to supply a signal on the passage of a corresponding article (11), said signal being correlated, by means of said processing unit (20), with said distance (H) and with the moment of transit of said article (11) through said passage section (28), in order to obtain the speed of transit of said article (11) through said passage section (28).

6. Apparatus as in any claim hereinbefore, **characterized in that** at least part of said emitter means (15) and said receiver means (16) are arranged on respective lying planes (α, β) different from each other and orthogonal to said direction of transit (X, Y) and/or in that said at least one part of said emitter means (15) arranged on the respective lying plane (α) is upstream of said receiver means (16) with respect to said direction of transit (X; Y) and/or **in that** said at least one part of said emitter means (15) arranged on the respective lying plane (α) is oriented toward at least part of said receiver means (16) with an angle of inclination (Θ) less than 5°.

7. Apparatus as in any claim hereinbefore, **characterized in that** said emitter means (15) are configured to emit radiation of infrared light with a wavelength (λ) comprised between 800 nm and 1000 nm, said radiation of infrared light being substantially unaltered by the interaction with dust.

8. Apparatus as in any claim hereinbefore, **characterized in that** said processing unit (20) comprises a counter (21) to count the number of said articles (11) which, during use, pass through said passage section (28) and/or **in that** said processing unit (20) comprises color analysis means (22) configured to supply on exit information relating to the color of said article (11) which, during use, passes through said passage section (28).

9. Apparatus as in any claim hereinbefore, **characterized in that** each of said emitter means (15) cooperates with at least part of said receiver means (16) to acquire, as a whole, said set of data relating to the whole perimeter, or section, of said article (11) which, during use, passes through said passage section (28) and/or **in that** said emitter means (15) are each configured to emit an electromagnetic radiation that is interrupted by the transit of said article (11) through said passage section (28), generating a shadow cone, **in that** said receiver means (16) are each configured to detect, instant by instant, the respective shadow cone, and thus determine a shadow projection, or profile, of a portion of the surface of said article (11), and **in that** said processing unit (20) is configured to determine, from the association of the shadow projections obtained in the same instant by said receiver means (16), a polygon whose area approximately corresponds to the area of a section of a portion of said article (11).

10. Apparatus as in claim 9, **characterized in that** said emitter means (15) and said receiver means (16) are configured to carry out a plurality of detections on distinct section planes of said article (11) in transit, and said processing unit (20) is configured to reconstruct, from said detections, the three-dimensional configuration of said article (11) through the association of a plurality of said polygons obtained during the transit of said article (11) through said passage section (28).

11. Computer-implemented method for acquiring information relating to one or more articles (11) in relative motion with respect to the apparatus, said information comprising one or more of the following: shape, volume, type, sizes, weight, color, possible presence of surface irregularities, volumetric distribution, and/or combinations thereof, said method comprising:
- performing acquisition scans of signals corresponding to the transit, through a passage section (28), of at least one of said articles (11) in a direction of transit (X, Y), by means of emitter means (15) and receiver means (16) arranged around said passage section (28), said emitter means (15) and said receiver means (16) being respectively configured to emit and receive electromagnetic radiations and supply a corresponding signal,
- processing said signals to obtain at least a set of data relating to a portion of said article ( 11) to determine from the latter one or more pieces of said information about said article (11);
**characterized in that** said receiver means (16) are arranged, essentially without a break in continuity, along a perimeter around said passage section (28) in order to receive at least part of the electromagnetic radiation emitted by said emitter means (15), and **in that** said emitter means (15) are arranged, with respect to said receiver means (16), oriented so as to emit an electromagnetic radiation toward said passage section (28), to strike with the electromagnetic radiation on said article (11) in transit through said passage section (28).

12. Method as in claim 11, **characterized in that** it also comprises:
- memorizing in advance processed information, associating it with each specific article (11) in transit through said passage section (28);
- performing a self-learning of the information relating to said one or more articles (11), comparing the information processed for each of said articles (11) in transit through said passage section (28) with the information relating to said one or more articles (11) previously memorized, in order to verify the correspondence of each of said articles (11) in transit through said passage section (28) with at least one of the articles (11) corresponding to said information memorized, so as to at least adapt the emission and/or reception characteristics of the electromagnetic radiations of at least one of said emitter means (15) and/or said receiver means (16) as a function of the correspondence of the information verified.

13. Method as in claim 12, **characterized in that** it provides to adapt the emission and/or reception characteristics of the electromagnetic radiations of at least one of said emitter means (15) and/or said receiver means (16) in relation to the possible presence of free and/or deposited dust on said emitter means (15) and/or said receiver means (16), wherein the possible presence of dust is determined by comparing the information processed relating to said one or more articles (11) with the information previously memorized and/or **in that** it provides to divert the path of said article (11) whenever the information processed does not correspond with said memorized information relating to a desired article (11).

14. Method as in claim 12 or 13, **characterized in that** at least part of said emitter means (15) emit electromagnetic radiations from a position lying on a lying plane (α) different from a lying plane (β) on which said receiver means (16) are arranged, said lying planes (α, β) being orthogonal to said direction of transit (X, Y) and/or **in that** the position from which said at least one part of said emitter means (15) emits electromagnetic radiations is arranged upstream of said receiver means (16) with respect to said direction of transit (X, Y) and/or **in that** said at least one part of said emitter means (15) emits electromagnetic radiations from said position lying on said lying plane (α) toward at least part of said receiver means (16) with an angle of inclination (Θ) less than 5°.

15. Method as in any of the claims from 11 to 14, **characterized in that** said emitter means (15) each emit an electromagnetic radiation that is interrupted by the transit of said article (11) through said passage section (28), generating a shadow cone, **in that** said receiver means (16) each detect, instant by instant, a shadow projection of said article (11), and **in that** said processing unit (20) associates each shadow projection of the same instant to determine a polygon whose area approximately corresponds to the area of a section of a portion of said article (11).

## Patentansprüche

1. Vorrichtung zum Erfassen von Informationen, die sich auf einen oder mehrere Gegenstände (11) in relativer Bewegung in Bezug auf die Vorrichtung beziehen, wobei die Informationen eine oder mehrere der Folgenden umfassen: Form, Volumen, Typ, Größe, Gewicht, Farbe, mögliches Vorhandensein von Oberflächenunregelmäßigkeiten, Volumenverteilung und/oder Kombinationen davon, wobei die Vorrichtung Folgendes umfasst:
- eine Erfassungsvorrichtung (14), die mit Sendermitteln (15) und Empfängermitteln (16) versehen ist, die um einen Durchgangsabschnitt (28) angeordnet sind, der geeignet ist, von mindestens einem der Gegenstände (11) beim Durchlauf in einer Durchlaufrichtung (X, Y) durchlaufen zu werden, wobei die Sendermittel (15) und die Empfängermittel (16) jeweils konfiguriert sind, um elektromagnetische Strahlungen auszusenden und zu empfangen und ein entsprechendes Signal zu liefern;
- eine Verarbeitungseinheit (20), die konfiguriert ist, um das Signal zu empfangen und zu verarbeiten, um mindestens einen Satz von Daten zu erhalten, die sich auf einen Abschnitt des Gegenstands (11) beziehen, aus dem eine oder mehrere der Informationen bestimmt werden sollen, die sich auf den Gegenstand (11) beziehen;
**dadurch gekennzeichnet, dass** die Empfängermittel (16), vorzugsweise vom CMOS-Typ, im Wesentlichen ohne Unterbrechung der Kontinuität entlang eines Umfangs um den Durchgangsabschnitt (28) angeordnet sind, um mindestens einen Teil der elektromagnetischen Strahlung zu empfangen, die von den Sendermitteln (15) ausgesendet wird, und dass die Sendermittel (15) in Bezug auf die Empfängermittel (16) so ausgerichtet sind, dass sie eine elektromagnetische Strahlung in Richtung des Durchgangsabschnitts (28) aussenden, und dass die elektromagnetischen Strahlung auf den Gegenstand (11) beim Durchlauf durch den Durchgangsabschnitt (28) auftrifft.

2. Vorrichtung nach Anspruch 1, **dadurch gekennzeichnet, dass** die Vorrichtung ferner Folgendes umfasst:
- eine Speichereinheit (29), die konfiguriert ist, um im Voraus Informationen zu speichern, die von der Verarbeitungseinheit (20) verarbeitet werden, wobei sie jedem spezifischen Gegenstand (11) zugeordnet werden;
- eine Steuer- und Befehlseinheit (25), die konfiguriert ist, um ein Selbstlernen der Informationen durchzuführen, die sich auf den einen oder die mehreren Gegenstände (11) beziehen, wobei die Informationen, die von der Verarbeitungseinheit (20) für jeden der während der Verwendung den Durchgangsabschnitt (28) durchlaufenden Gegenstände (11) verarbeitet werden, mit den Informationen verglichen werden, die sich auf den einen oder die mehreren Gegenstände (11) beziehen, die zuvor in der Speichereinheit (29) gespeichert wurden, um die Übereinstimmung jedes der Gegenstände (11) beim Durchlauf durch den Durchgangsabschnitt (28) mit mindestens einem der Gegenstände (11) zu verifizieren, die den gespeicherten Informationen entsprechen, um mindestens die Sende- und/oder Empfangseigenschaften der elektromagnetischen Strahlungen mindestens eines der Sendermittel (15) und/oder der Empfängermittel (16) in Abhängigkeit von der Übereinstimmung der verifizierten Informationen anzupassen.

3. Vorrichtung nach Anspruch 2, **dadurch gekennzeichnet, dass** die Steuer- und Befehlseinheit (25) konfiguriert ist, um die Sende- und/oder Empfangseigenschaften der elektromagnetischen Strahlungen mindestens eines der Sendermittel (15) und/oder der Empfängermittel (16) in Bezug auf das mögliche Vorhandensein von freiem und/oder abgelagertem Staub auf den Sendermitteln (15) und/oder den Empfängermitteln (16) anzupassen, wobei das mögliche Vorhandensein von Staub mittels der Steuer- und Befehlseinheit (25) bestimmt wird, die konfiguriert ist, um die verarbeiteten, sich auf den einen oder die mehreren Gegenstände (11) beziehenden Informationen mit den zuvor gespeicherten Informationen zu vergleichen.

4. Vorrichtung nach Anspruch 2 oder 3, **dadurch gekennzeichnet, dass** sie Staubentfernungsmittel (24) umfasst, die von der Steuer- und Befehlseinheit (25) gesteuert werden, um mittels mechanischer Vibrationen möglichen Staub zu entfernen, der sich auf den Sendermitteln (15) und/oder den Empfängermitteln (16) abgelagert hat, und/oder dass sie ein Auswahlelement (27) umfasst, das von der Steuer- und Befehlseinheit (25) gesteuert wird, um den Weg eines Gegenstands (11), der nicht einem gewünschten Gegenstand entspricht, abzulenken, wobei die Informationen über den gewünschten Gegenstand (11) in der Speichereinheit (29) gespeichert werden, und/oder dass die Steuer- und Befehlseinheit (25) Berechnungsmittel (26) umfasst, die konfiguriert sind, um die Masse des während der Verwendung den Durchgangsabschnitt (28) durchlaufenden Gegenstands (11) zu berechnen, wobei die Masse durch Multiplizieren des von der Verarbeitungseinheit (20) verarbeiteten Volumens des Gegenstands (11) mit seiner Dichte berechnet wird.

5. Vorrichtung nach einem der vorhergehenden Ansprüche, **dadurch gekennzeichnet, dass** sie mindestens einen optischen Sensor (30) umfasst, der in einem definierten Abstand (H) stromaufwärts der Erfassungsvorrichtung (14) in der Durchlaufrichtung (X, Y) angeordnet ist, wobei der optische Sensor (30) konfiguriert ist, um ein Signal über den Durchgang eines entsprechenden Gegenstands (11) zu liefern, wobei das Signal mittels der Verarbeitungseinheit (20) mit dem Abstand (H) und mit dem Zeitpunkt des Durchlaufs des Gegenstands (11) durch den Durchgangsabschnitt (28) korreliert wird, um die Durchlaufgeschwindigkeit des Gegenstands (11) durch den Durchgangsabschnitt (28) zu erhalten.

6. Vorrichtung nach einem der vorhergehenden Ansprüche, **dadurch gekennzeichnet, dass** mindestens ein Teil der Sendermittel (15) und der Empfängermittel (16) auf jeweiligen liegenden Ebenen (α, β) angeordnet sind, die sich voneinander unterscheiden und orthogonal zur Durchlaufrichtung (X, Y) sind, und/oder dass der mindestens eine Teil der Sendermittel (15), der auf der jeweiligen liegenden Ebene (α) angeordnet ist, stromaufwärts der Empfängermittel (16) in Bezug auf die Durchlaufrichtung (X; Y) ist, und/oder dass der mindestens eine Teil der Sendermittel (15), der auf der jeweiligen liegenden Ebene (α) angeordnet ist, in Richtung mindestens eines Teils der Empfängermittel (16) mit einem Neigungswinkel (Θ) von weniger als 5° ausgerichtet ist.

7. Vorrichtung nach einem der vorhergehenden Ansprüche, **dadurch gekennzeichnet, dass** die Sendermittel (15) konfiguriert sind, um Strahlung von Infrarotlicht mit einer Wellenlänge (λ) auszusenden, die zwischen 800 nm und 1000 nm liegt, wobei die Strahlung von Infrarotlicht durch die Wechselwirkung mit Staub im Wesentlichen unverändert bleibt.

8. Vorrichtung nach einem der vorhergehenden Ansprüche, **dadurch gekennzeichnet, dass** die Verarbeitungseinheit (20) einen Zähler (21) umfasst, um die Anzahl der Gegenstände (11) zu zählen, die während der Verwendung den Durchgangsabschnitt (28) durchlaufen, und/oder dass die Verarbeitungseinheit (20) Farbanalysemittel (22) umfasst, die konfiguriert sind, um am Ausgang Informationen bezüglich der Farbe des Gegenstands (11) zu liefern, der während der Verwendung den Durchgangsabschnitt (28) durchläuft.

9. Vorrichtung nach einem der vorhergehenden Ansprüche, **dadurch gekennzeichnet, dass** jedes der Sendermittel (15) mit mindestens einem Teil der Empfängermittel (16) zusammenwirkt, um als Ganzes den Satz von Daten zu erfassen, die sich auf den gesamten Umfang oder Abschnitt des Gegenstands (11) beziehen, der während der Verwendung den Durchgangsabschnitt (28) durchläuft, und/oder dass die Sendermittel (15) jeweils konfiguriert sind, um eine elektromagnetische Strahlung auszusenden, die durch den Durchlauf des Gegenstands (11) durch den Durchgangsabschnitt (28) unterbrochen wird, wodurch ein Schattenkegel erzeugt wird, dass die Empfängermittel (16) jeweils konfiguriert sind, um sofort den jeweiligen Schattenkegel zu detektieren und somit eine Schattenprojektion oder ein Profil eines Abschnitts der Oberfläche des Gegenstands (11) zu bestimmen, und dass die Verarbeitungseinheit (20) konfiguriert ist, um aus der Zuordnung der Schattenprojektionen, die im gleichen Zeitpunkt von den Empfängermitteln (16) erhalten werden, ein Polygon zu bestimmen, dessen Fläche ungefähr der Fläche eines Abschnitts eines Abschnitts des Gegenstands (11) entspricht.

10. Vorrichtung nach Anspruch 9, **dadurch gekennzeichnet, dass** die Sendermittel (15) und die Empfängermittel (16) konfiguriert sind, um eine Vielzahl von Detektionen auf verschiedenen Schnittebenen des Gegenstands (11) während des Durchlaufs auszuführen, und die Verarbeitungseinheit (20) konfiguriert ist, um aus den Detektionen die dreidimensionale Konfiguration des Gegenstands (11) durch die Zuordnung einer Vielzahl der Polygone zu rekonstruieren, die während des Durchlaufs des Gegenstands (11) durch den Durchgangsabschnitt (28) erhalten werden.

11. Computerimplementiertes Verfahren zum Erfassen von Informationen, die sich auf einen oder mehrere Gegenstände (11) in relativer Bewegung in Bezug auf die Vorrichtung beziehen, wobei die Informationen eine oder mehrere der Folgenden umfassen: Form, Volumen, Typ, Größe, Gewicht, Farbe, mögliches Vorhandensein von Oberflächenunregelmäßigkeiten, Volumenverteilung und/oder Kombinationen davon, wobei das Verfahren Folgendes umfasst:
- Durchführen von Erfassungsabtastungen von Signalen, die dem Durchlauf durch einen Durchgangsabschnitt (28) mindestens eines der Gegenstände (11) in einer Durchlaufrichtung (X, Y) entsprechen, mittels Sendermitteln (15) und Empfängermitteln (16), die um den Durchgangsabschnitt (28) angeordnet sind, wobei die Sendermittel (15) und die Empfängermittel (16) jeweils konfiguriert sind, um elektromagnetische Strahlungen auszusenden und zu empfangen und ein entsprechendes Signal zu liefern,
- Verarbeiten der Signale, um mindestens einen Satz von Daten zu erhalten, die sich auf einen Abschnitt des Gegenstands (11) beziehen, um aus dem Letzteren eine oder mehrere der Informationen über den Gegenstand (11) zu bestimmen;
**dadurch gekennzeichnet, dass** die Empfängermittel (16) im Wesentlichen ohne Unterbrechung der Kontinuität entlang eines Umfangs um den Durchgangsabschnitt (28) angeordnet sind, um mindestens einen Teil der elektromagnetischen Strahlung zu empfangen, die von den Sendermitteln (15) ausgesendet wird, und dass die Sendermittel (15) in Bezug auf die Empfängermittel (16) so ausgerichtet sind, dass sie eine elektromagnetische Strahlung in Richtung des Durchgangsabschnitts (28) aussenden, um mit der elektromagnetischen Strahlung auf den Gegenstand (11) beim Durchlauf durch den Durchgangsabschnitt (28) aufzutreffen.

12. Verfahren nach Anspruch 11, **dadurch gekennzeichnet, dass** es ferner Folgendes umfasst:
- Abspeichern von im Voraus verarbeiteten Informationen, die sie beim Durchlauf durch den Durchgangsabschnitt (28) jedem spezifischen Gegenstand (11) zuordnet;
- Durchführen eines Selbstlernens der Informationen, die sich auf den einen oder die mehreren Gegenstände (11) beziehen, wobei die Informationen, die für jeden der Gegenstände (11) beim Durchlauf durch den Durchgangsabschnitt (28) verarbeitet werden, mit den Informationen verglichen werden, die sich auf den einen oder die mehreren zuvor gespeicherten Gegenstände (11) beziehen, um die Übereinstimmung jedes der Gegenstände (11) beim Durchlauf durch den Durchgangsabschnitt (28) mit mindestens einem der Gegenstände (11) zu verifizieren, die den gespeicherten Informationen entsprechen, um mindestens die Sende- und/oder Empfangseigenschaften der elektromagnetischen Strahlungen mindestens eines der Sendermittel (15) und/oder der Empfängermittel (16) in Abhängigkeit von der Übereinstimmung der verifizierten Informationen anzupassen.

13. Verfahren nach Anspruch 12, **dadurch gekennzeichnet, dass** es vorsieht, die Sende- und/oder Empfangseigenschaften der elektromagnetischen Strahlungen mindestens eines der Sendermittel (15) und/oder der Empfängermittel (16) in Bezug auf das mögliche Vorhandensein von freiem und/oder abgelagertem Staub auf den Sendermitteln (15) und/oder den Empfängermitteln (16) anzupassen, wobei das mögliche Vorhandensein von Staub durch Vergleichen der verarbeiteten Informationen, die sich auf den einen oder die mehreren Gegenstände (11) beziehen, mit den zuvor gespeicherten Informationen bestimmt wird, und/oder dass es vorsieht, den Weg des Gegenstands (11) abzulenken, wenn die verarbeiteten Informationen nicht den gespeicherten Informationen entsprechen, die sich auf einen gewünschten Gegenstand (11) beziehen.

14. Verfahren nach Anspruch 12 oder 13, **dadurch gekennzeichnet, dass** mindestens ein Teil der Sendermittel (15) elektromagnetische Strahlung von einer Position aussendet, die auf einer liegenden Ebene (α) liegt, die sich von einer liegenden Ebene (β) unterscheidet, auf der die Empfängermittel (16) angeordnet sind, wobei die liegenden Ebenen (α, β) orthogonal zur Durchlaufrichtung (X, Y) sind, und/oder dass die Position, von der der mindestens eine Teil der Sendermittel (15) elektromagnetische Strahlungen aussendet, stromaufwärts der Empfängermittel (16) in Bezug auf die Durchlaufrichtung (X, Y) angeordnet ist, und/oder dass der mindestens eine Teil der Sendermittel (15) elektromagnetische Strahlungen von der Position, die auf der liegenden Ebene (α) liegt, in Richtung mindestens eines Teils der Empfängermittel (16) mit einem Neigungswinkel (Θ) von weniger als 5° aussendet.

15. Verfahren nach einem der Ansprüche 11 bis 14, **dadurch gekennzeichnet, dass** die Sendermittel (15) jeweils eine elektromagnetische Strahlung aussenden, die durch den Durchlauf des Gegenstands (11) durch den Durchgangsabschnitt (28) unterbrochen wird, wodurch ein Schattenkegel erzeugt wird, dass die Empfängermittel (16) jeweils sofort eine Schattenprojektion des Gegenstands (11) detektieren, und dass die Verarbeitungseinheit (20) jede Schattenprojektion des gleichen Zeitpunkts zuordnet, um ein Polygon zu bestimmen, dessen Fläche ungefähr der Fläche eines Abschnitts eines Abschnitts des Gegenstands (11) entspricht.

## Revendications

1. Appareil d'acquisition d'informations relatives à un ou plusieurs articles (11) en mouvement relatif par rapport à l'appareil, lesdites informations comprenant un ou plusieurs des éléments suivants : forme, volume, type, tailles, poids, couleur, présence éventuelle d'irrégularités de surface, distribution volumétrique, et/ou des combinaisons de ceux-ci, dans lequel ledit appareil comprend :
- un dispositif d'acquisition (14) pourvu de moyens émetteurs (15) et de moyens récepteurs (16) agencés autour d'une section de passage (28) appropriée pour être traversée par au moins un desdits articles (11) en transit dans une direction de transit (X, Y), lesdits moyens émetteurs (15) et lesdits moyens récepteurs (16) étant respectivement configurés pour émettre et recevoir des rayonnements électromagnétiques et fournir un signal correspondant ;
- une unité de traitement (20) configurée pour recevoir et traiter ledit signal afin d'obtenir au moins un jeu de données relatif à une portion dudit article (11) à partir duquel déterminer un ou plusieurs éléments desdites informations relatives audit article (11) ;
**caractérisé en ce que** lesdits moyens récepteurs (16), de préférence de type CMOS, sont agencés, essentiellement sans rupture de continuité, le long d'un périmètre autour de ladite section de passage (28) afin de recevoir au moins une partie du rayonnement électromagnétique émis par lesdits moyens émetteurs (15), et **en ce que** lesdits moyens émetteurs (15) sont agencés, par rapport auxdits moyens récepteurs (16), orientés de manière à émettre un rayonnement électromagnétique vers ladite section de passage (28), pour frapper avec le rayonnement électromagnétique sur ledit article (11) en transit à travers ladite section de passage (28).

2. Appareil selon la revendication 1, **caractérisé en ce que** ledit appareil comprend en outre :
- une unité de mémorisation (29) configurée pour mémoriser à l'avance les informations traitées par ladite unité de traitement (20), en les associant à chaque article (11) spécifique ;
- une unité de contrôle et de commande (25) configurée pour effectuer un auto-apprentissage des informations relatives auxdits un ou plusieurs articles (11), en comparant les informations traitées par ladite unité de traitement (20) pour chacun desdits articles (11) qui, pendant l'utilisation, passe à travers ladite section de passage (28), avec les informations relatives auxdits un ou plusieurs articles (11) préalablement mémorisées dans ladite unité de mémorisation (29), afin de vérifier la correspondance de chacun desdits articles (11) en transit à travers ladite section de passage (28) avec au moins un des articles (11) correspondant auxdites informations mémorisées de manière à au moins adapter les caractéristiques d'émission et/ou de réception des rayonnements électromagnétiques d'au moins un desdits moyens émetteurs (15) et/ou desdits moyens récepteurs (16) en fonction de la correspondance des informations vérifiées.

3. Appareil selon la revendication 2, **caractérisé en ce que** ladite unité de contrôle et de commande (25) est configurée pour adapter les caractéristiques d'émission et/ou de réception des rayonnements électromagnétiques d'au moins un desdits moyens émetteurs (15) et/ou desdits moyens récepteurs (16) en relation avec la présence éventuelle de poussière libre et/ou déposée sur lesdits moyens émetteurs (15) et/ou lesdits moyens récepteurs (16), dans lequel la présence éventuelle de poussière est déterminée au moyen de ladite unité de contrôle et de commande (25) qui est configurée pour comparer les informations traitées relatives auxdits un ou plusieurs articles (11) avec les informations préalablement mémorisées.

4. Appareil selon la revendication 2 ou 3, **caractérisé en ce qu'**il comprend des moyens d'élimination de poussière (24) commandés par ladite unité de contrôle et de commande (25) pour éliminer, au moyen de vibrations mécaniques, la poussière éventuelle déposée sur lesdits moyens émetteurs (15) et/ou lesdits moyens récepteurs (16) et/ou **en ce qu'**il comprend un élément sélecteur (27), commandé par ladite unité de contrôle et de commande (25) pour dévier le trajet d'un article (11) ne correspondant pas à un article souhaité, dans lequel lesdites informations sur ledit article (11) souhaité sont mémorisées dans ladite unité de mémorisation (29) et/ou **en ce que** ladite unité de contrôle et de commande (25) comprend des moyens de calcul (26) configurés pour calculer la masse dudit article (11) qui, pendant l'utilisation, traverse ladite section de passage (28), dans lequel ladite masse est calculée en multipliant le volume traité par ladite unité de traitement (20) dudit article (11) par sa densité.

5. Appareil selon l'une quelconque des revendications précédentes, **caractérisé en ce qu'**il comprend au moins un capteur optique (30) agencé à une distance (H) définie en amont dudit dispositif d'acquisition (14), dans ladite direction de transit (X, Y), ledit capteur optique (30) étant configuré pour fournir un signal sur le passage d'un article (11) correspondant, ledit signal étant corrélé, au moyen de ladite unité de traitement (20), avec ladite distance (H) et avec le moment de transit dudit article (11) à travers ladite section de passage (28), afin d'obtenir la vitesse de transit dudit article (11) à travers ladite section de passage (28).

6. Appareil selon l'une quelconque des revendications précédentes, **caractérisé en ce qu'**au moins une partie desdits moyens émetteurs (15) et desdits moyens récepteurs (16) sont agencés sur des plans de couchage (α, β) respectifs différents l'un de l'autre et orthogonaux à ladite direction de transit (X, Y) et/ou **en ce que** ladite au moins une partie desdits moyens émetteurs (15) agencés sur le plan de couchage (α) respectif est en amont desdits moyens récepteurs (16) par rapport à ladite direction de transit (X ; Y) et/ou **en ce que** ladite au moins une partie desdits moyens émetteurs (15) agencés sur le plan de couchage (α) respectif est orientée vers au moins une partie desdits moyens récepteurs (16) avec un angle d'inclinaison (Θ) inférieur à 5°.

7. Appareil selon l'une quelconque des revendications précédentes, **caractérisé en ce que** lesdits moyens émetteurs (15) sont configurés pour émettre un rayonnement de lumière infrarouge avec une longueur d'onde (λ) comprise entre 800 nm et 1000 nm, ledit rayonnement de lumière infrarouge étant sensiblement inchangé par l'interaction avec la poussière.

8. Appareil selon l'une quelconque des revendications précédentes, **caractérisé en ce que** ladite unité de traitement (20) comprend un compteur (21) pour compter le nombre desdits articles (11) qui, pendant l'utilisation, passent à travers ladite section de passage (28) et/ou **en ce que** ladite unité de traitement (20) comprend des moyens d'analyse de couleur (22) configurés pour fournir à la sortie des informations relatives à la couleur dudit article (11) qui, pendant l'utilisation, passe à travers ladite section de passage (28).

9. Appareil selon l'une quelconque des revendications précédentes, **caractérisé en ce que** chacun desdits moyens émetteurs (15) coopère avec au moins une partie desdits moyens récepteurs (16) pour acquérir, dans son ensemble, ledit jeu de données relatif à l'ensemble du périmètre, ou de la section, dudit article (11) qui, pendant l'utilisation, passe à travers ladite section de passage (28) et/ou **en ce que** lesdits moyens émetteurs (15) sont chacun configurés pour émettre un rayonnement électromagnétique qui est interrompu par le transit dudit article (11) à travers ladite section de passage (28), générant un cône d'ombre, **en ce que** lesdits moyens récepteurs (16) sont chacun configurés pour détecter, instant par instant, le cône d'ombre respectif, et ainsi déterminer une projection, ou un profil, d'ombre d'une portion de la surface dudit article (11), et **en ce que** ladite unité de traitement (20) est configurée pour déterminer, à partir de l'association des projections d'ombre obtenues au même instant par lesdits moyens récepteurs (16), un polygone dont la surface correspond approximativement à la surface d'une section d'une portion dudit article (11).

10. Appareil selon la revendication 9, **caractérisé en ce que** lesdits moyens émetteurs (15) et lesdits moyens récepteurs (16) sont configurés pour effectuer une pluralité de détections sur des plans de section distincts dudit article (11) en transit, et ladite unité de traitement (20) est configurée pour reconstruire, à partir desdites détections, la configuration tridimensionnelle dudit article (11) à travers l'association d'une pluralité desdits polygones obtenus pendant le transit dudit article (11) à travers ladite section de passage (28).

11. Procédé mis en œuvre par ordinateur pour acquérir des informations relatives à un ou plusieurs articles (11) en mouvement relatif par rapport à l'appareil, lesdites informations comprenant un ou plusieurs des éléments suivants : forme, volume, type, tailles, poids, couleur, présence éventuelle d'irrégularités de surface, distribution volumétrique, et/ou des combinaisons de ceux-ci, ledit procédé comprenant :
- la réalisation de balayages d'acquisition de signaux correspondant au transit, à travers une section de passage (28), d'au moins un desdits articles (11) dans une direction de transit (X, Y), au moyen de moyens émetteurs (15) et de moyens récepteurs (16) agencés autour de ladite section de passage (28), lesdits moyens émetteurs (15) et lesdits moyens récepteurs (16) étant respectivement configurés pour émettre et recevoir des rayonnements électromagnétiques et fournir un signal correspondant,
- le traitement desdits signaux pour obtenir au moins un jeu de données relatif à une portion dudit article (11) afin de déterminer à partir de ce dernier un ou plusieurs éléments desdites informations concernant ledit article (11) ;
**caractérisé en ce que** lesdits moyens récepteurs (16) sont agencés, essentiellement sans rupture de continuité, le long d'un périmètre autour de ladite section de passage (28) afin de recevoir au moins une partie du rayonnement électromagnétique émis par lesdits moyens émetteurs (15), et **en ce que** lesdits moyens émetteurs (15) sont agencés, par rapport auxdits moyens récepteurs (16), orientés de manière à émettre un rayonnement électromagnétique vers ladite section de passage (28), pour frapper avec le rayonnement électromagnétique sur ledit article (11) en transit à travers ladite section de passage (28).

12. Procédé selon la revendication 11, **caractérisé en ce qu'**il comprend également :
- la mémorisation, à l'avance, d'informations traitées, en les associant à chaque article (11) spécifique en transit à travers ladite section de passage (28) ;
- la réalisation d'un auto-apprentissage des informations relatives auxdits un ou plusieurs articles (11), en comparant les informations traitées pour chacun desdits articles (11) en transit à travers ladite section de passage (28), avec les informations relatives auxdits un ou plusieurs articles (11) préalablement mémorisées, afin de vérifier la correspondance de chacun desdits articles (11) en transit à travers ladite section de passage (28) avec au moins un des articles (11) correspondant auxdites informations mémorisées de manière à au moins adapter les caractéristiques d'émission et/ou de réception des rayonnements électromagnétiques d'au moins un desdits moyens émetteurs (15) et/ou desdits moyens récepteurs (16) en fonction de la correspondance des informations vérifiées.

13. Procédé selon la revendication 12, **caractérisé en ce qu'**il prévoit d'adapter les caractéristiques d'émission et/ou de réception des rayonnements électromagnétiques d'au moins un desdits moyens émetteurs (15) et/ou desdits moyens récepteurs (16) en relation avec la présence éventuelle de poussière libre et/ou déposée sur lesdits moyens émetteurs (15) et/ou lesdits moyens récepteurs (16), dans lequel la présence éventuelle de poussière est déterminée en comparant les informations traitées relatives auxdits un ou plusieurs articles (11) avec les informations préalablement mémorisées et/ou **en ce qu'**il prévoit de dévier le trajet dudit article (11) chaque fois que les informations traitées ne correspondent pas auxdites informations mémorisées relatives à un article (11) souhaité.

14. Procédé selon la revendication 12 ou 13, **caractérisé en ce qu'**au moins une partie desdits moyens émetteurs (15) émettent des rayonnements électromagnétiques à partir d'une position de couchage sur un plan de couchage (α) différent d'un plan de couchage (β) sur lequel lesdits moyens récepteurs (16) sont agencés, lesdits plans de couchage (α, β) étant orthogonaux à ladite direction de transit (X, Y) et/ou en ce que la position à partir de laquelle ladite au moins une partie desdits moyens émetteurs (15) émet des rayonnements électromagnétiques est agencée en amont desdits moyens récepteurs (16) par rapport à ladite direction de transit (X, Y) et/ou en ce que ladite au moins une partie desdits moyens émetteurs (15) émet des rayonnements électromagnétiques à partir de ladite position située sur ledit plan de couchage (α) vers au moins une partie desdits moyens récepteurs (16) avec un angle d'inclinaison (Θ) inférieur à 5°.

15. Procédé selon l'une quelconque des revendications 11 à 14, **caractérisé en ce que** lesdits moyens émetteurs (15) émettent chacun un rayonnement électromagnétique qui est interrompu par le transit dudit article (11) à travers ladite section de passage (28), générant un cône d'ombre, **en ce que** lesdits moyens récepteurs (16) détectent chacun, instant par instant, une projection d'ombre dudit article (11), et **en ce que** ladite unité de traitement (20) associe chaque projection d'ombre du même instant pour déterminer un polygone dont la surface correspond approximativement à la surface d'une section d'une portion dudit article (11).
